# EUROPEAN PATENT SPECIFICATION

(11) **EP 3 466 262 B1**
(45) Date of publication and mention of the grant of the patent: **24.02.2021**
(21) Application number: 17810290.1
(22) Date of filing: 06.06.2017
(51) Int. Cl.: A01N 25/34, A01N 53/06, A01P 7/04, A01N 25/20

(54) **MOSQUITO REPELLENT AGENT AND MOSQUITO REPELLING METHOD**
MÜCKENABWEHRMITTEL UND MÜCKENABWEHRVERFAHREN
AGENT RÉPULSIF À MOUSTIQUES ET PROCÉDÉ DE RÉPULSION DES MOUSTIQUES

(30) Priority: 06.06.2016 JP 2016112875
(43) Date of publication of application: 10.04.2019
(73) Proprietor: Lion Chemical Co., Ltd., Arida-shi, Wakayama 649-0311 (JP)
(72) Inventor: KOBAYASHI, Tomonori, Arida-shi Wakayama 649-0303 (JP); TAKEMOTO, Masanobu, Arida-shi Wakayama 649-0303 (JP); TANAKA, Motonori, Arida-shi Wakayama 649-0311 (JP)
(74) Representative: Seemann & Partner Patentanwälte mbB
(86) International application number: PCT/JP2017/020924
(87) International publication number: WO 2017/213115

(56) References cited:
- EP-A2- 0 639 331
- GB-A- 2 276 320
- JP-A- 2014 148 503
- JP-A- 2015 028 004
- JP-Y- T 125 599
- JP-Y- T 125 714
- JP-Y- T1 210 967
- JP-Y1- S4 636 559
- JP-Y2- S 039 741
- JP-Z2- 49 665
- JP-Z2- 59 277

## Description

### Technical Field

The present invention generally relates to mosquito repellents and methods for eliminating mosquitos, and specifically relates to a combustible mosquito repellent and a method for eliminating mosquitos using the mosquito repellent.

### Background Art

A mosquito repellent coil is known as a conventional combustible mosquito repellent. In the mosquito repellent coil, an active ingredient which repels and eliminates mosquitos is contained in a combustible material which is formed into a coil and whose main component is a mixed plant powder. Igniting one end of the mosquito repellent coil starts combustion of the combustible material, and heat generated due to the combustion vaporizes the active ingredient. At the same time, smoke is generated as a byproduct of the combustion of the combustible material, and the vaporized active ingredient attaches to smoke particles composing the smoke. Then the smoke particles to which the active ingredient attaches spreads through space and thereby mosquitos in the space can be eliminated. In this mosquito repellent coil, dl·d-T80-allethrin which starts to vaporize at around 150 °C and undergoes thermal decomposition at around 400 °C is used as the active ingredient. Since the combusting portion of the mosquito repellent coil reaches up to 700 to 800 °C, dl·d-T80-allethrin in the combustible material exposed to such high temperature undergoes thermal decomposition. However, a portion of the combustible material 6 to 8 mm away from the combusting portion is at a relatively low temperature such as around 250 °C, and therefore dl·d-T80-allethrin does not undergo thermal decomposition in this portion and rather vaporizes (refer to, for example, non-patent literature 1).

The vaporized dl·d-T80-allethrin attaches to the smoke particles generated by combustion of the combustible material such as the mixed plant powder and spreads through space, and thereby mosquitos existing in the space come in contact with dl·d-T80-allethrin attached to the smoke particles and are eliminated. Since a vapor pressure of dl·d-T80-allethrin is low, volatility of dl·d-T80-allethrin is also low and therefore dl·d-T80-allethrin spread in the space is gradually cooled down and going back to liquid and then drops. Afterwards, dl·d-T80-allethrin vaporizes only slowly due to its low volatility, i.e., low vapor pressure. Therefore, after dl·d-T80-allethrin drops as liquid, an effect of eliminating mosquitos tremendously lowers. Due to this, the conventional mosquito repellent coil is only viable for eliminating mosquitos only while dl·d-T80-allethrin is heated by continuous combustion and the smoke is generated by the combustion of the combustible material. Hence it is difficult to continuously eliminate mosquitoes overnight, unless the combustion is continued for normally 7 to 8 hours and if necessary for 12 to 13 hours.

On the other hand, as airtightness in housing has been increasing in recent years, the smoke generated by the combustion of the mosquito repellent coil stays within and fills the housing space, leading to increased dissatisfaction of the residents. In addition, the smoke generated by the combustion can cause sickness of the residents who inhale the smoke.

Due to the above conditions, electronic mosquito repellent devices which can spread the active ingredient in the housing space without generating smoke was developed. One of such devices is a mat-type mosquito repellent. The mat-type mosquito repellent device contains a mat including linters and pulp, and the mat is impregnated with an active ingredient dissolved in an organic solvent which functions as a vaporization regulator and to which a pigment is added. The mat is placed on a heating plate, and heating of the mat spreads the active ingredient. In terms of spreading the active ingredient by heating, the mat-type mosquito repellent device employs the same mechanism as the mosquito repellent coil. However, the mat-type mosquito repellent device has an advantage that the smoke is not generated by the combustion of the combustible material as in the mosquito repellent coil. On the other hand, the mat-type mosquito repellent device has a disadvantage that spreading of the active ingredient is not thorough throughout the space due to the absence of the smoke. There also exists a disadvantage that the mat in the mat-type mosquito repellent device needs to be changed every day.

Taking the above circumstances into account, a liquid-type mosquito repellent device was developed to keep the advantage of the mat-type mosquito repellent device but to overcome the disadvantage that the mat needs to be changed every day. In the liquid-type electronic mosquito repellent device, an active ingredient dissolved in an organic solvent which functions as a vaporization regulator is filled in a plastic container. A core is attached inside the plastic container, and the core absorbs the liquid containing the active ingredient. A top of the core is heated and thereby the active ingredient is spread in the housing space. An advantage of the liquid-type electronic mosquito repellent device is that an effect of eliminating mosquitoes does not lower while the liquid-type electronic mosquito repellent device is being energized and that change of the core is not required as long as the liquid remains.

However, there exists a disadvantage that the active ingredient tends not to thoroughly spread throughout the housing space due to the absence of medium such as the smoke which facilitates the spread of the active ingredient in the housing space. Also, since the organic solvent vaporizes with the active ingredient continuously, there exists a disadvantage that the organic solvent might be a cause of a health problem for people sensitive to chemicals.

In recent years, an aerosol mosquito repellent with one-push fixed-amount spray has been proposed as a method for spreading an active ingredient throughout the housing space without the generation of the smoke, without relying on heating by heat generatd by combustion or generated by energization, and with only a slight amount of the organic solvent (refer to, for example, patent literatures 1, 2).

In this method, an organic solvent containing an active ingredient at a relatively high concentration is filled in an aerosol can to which a nozzle for spraying the liquid at a low fixed amount is attached. Also, since the active ingredient which is volatile at a low temperature or a normal temperature is used, the active ingredient which is sprayed once to the space and drops to the floor or attaches to the floor, the wall, and the ceiling vaporizes again. Vaporization of the active ingredient occurs repeatedly and thereby an effect of eliminating mosquitoes continues for a certain period of time. Employing this method, a possible unpleasant influence on the residents due to the smoke and the organic solvent is no longer worried, and using the aerosol mosquito repellent once a day can expect the effect of eliminating mosquitos overnight. However, there have been many misuses reported recently such as a user sprays the aerosol mosquito repellent in a wrong direction and mistakenly sprays it to the user him/herself. In addition, even though spraying the aerosol mosquito repellent once a day is sufficient, an overuse such as spraying the aerosol mosquito repellent to the same space more than once has also been observed. Furthermore, a problem has surfaced that re-spreading of the active ingredient after sprayed is not fully taking place depending on a direction of spraying. Due to these reasons, safe use of the mosquito repellent and the effect of eliminating mosquitos are not realized.

On the other hand, it is proposed to apply the active ingredient which is volatile at a low temperature or a normal temperature used in the aerosol mosquito repellent with one-push fixed-amount spray to the conventional mosquito repellent coil in order to create an atmosphere which is able to eliminate bugs for 5 hours or more in a 25 m³ or smaller room by the combustion of 1 hour or shorter (refer to, for example, patent literature 3).

### Citation List

### Patent Literature

Patent Literature 1: JP 5210811 B2
Patent Literature 2: JP 5352531 B2
Patent Literature 3: JP 5279039 B2
EP 0 639 331 A2 discloses an insecticidal and acaricidal smoke fumigant formulation. This is obtained by mixing granules A having a bulk specific gravity of 0,3 to 0,9 and containing a pyrethroid compound as an active ingredient, an inflammable substance and an organic blowing agent, with granules B having a bulk specific gravity of 0,5 to 1,1 and containing potassium perchlorate, potassium nitrate and/or potassium chlorate, burning agent, heat generation-regulating agent, perchlorate-decomposing aid and inorganic filler. The mixing ratio (weight ratio) of the granules A and the granules B is 1 to 0,5-4.
GB 2 276 320 A discloses a senko, i.e. a substance for volatilising an active ingredient by incomplete combustion. This contains silicon carbide and shows a high active ingredient volatilisation rate. The active ingredient may be an insecticide or a perfume.

### Non patent Literature

Non-patent Literature 1: "Introduction to Household Pesticide III", [online], Household Pesticide Industry Association of Japan, [searched on April 5, 2016], Internet (URL http://sacchuzai .j p/images/gairon. pdf)

### Summary of Invention

The present invention aims to provide a mosquito repellent and a method for eliminating mosquitos which has a continuing effect of eliminating mosquitos for 5 hours or more by combustion of a short period of time such as few minutes to little more than ten minutes.

The mosquito repellent according to the invention includes: an active ingredient; and a combustible material. The mosquito repellent has a shape of cone. A ratio of a diameter of a base of the cone to a height of the cone is within a range of 1:2 to 1:5. The diameter is within a range of 5 to 20 mm. The active ingredient being at least one or more kinds of compounds selected from a group consisting of metofluthrin, transfluthrin, dimefluthrin, heptafluthrin and meperfluthrin, the mosquito repellent containing 3 to 20 mg of the active ingredient. A weight of the mosquito repellent is within a range of 0,1 to 8 g.

The mosquito repellent according to the second embodiment of the present invention includes: an active ingredient; and a combustible material. The mosquito repellent has a shape of triangular prism. A ratio of a base length of a base triangle of the triangular prism to a height of the base triangle of the triangular prism is within a range of 1:1, 1 to 1:5. The base length is within a range of 10 to 30 mm. A weight of the mosquito repellent is within a range of 0,5 to 6 g.

In the mosquito repellent according to the third embodiment of the present invention, realized in combination with the second embodiment, a height of the triangular prism is within a range of 2 to 6 mm.

In the mosquito repellent according to the forth embodiment of the present invention, realized in combination with any one of the first to third embodiments, the active ingredient is metofluthrin, and the mosquito repellent contains 3 to 10 mg of the metofluthrin.

In the mosquito repellent according to the fifth embodiment of the present invention, realized in combination with any one of the first to forth embodiments, the active ingredient is transfluthrin, and the mosquito repellent contains 3 to 20 mg of the transfluthrin.

In the mosquito repellent according to the sixth embodiment of the present invention, realized in combination with any one of the first to fifth embodiments, the active ingredient is dimefluthrin, and the mosquito repellent contains 3 to 20 mg of the dimefluthrin.

In the mosquito repellent according to the seventh embodiment of the present invention, realized in combination with any one of the first to sixth embodiments, the active ingredient is heptafluthrin, and the mosquito repellent contains 3 to 20 mg of the heptafluthrin.

In the mosquito repellent according to the eighth embodiment of the present invention, realized in combination with any one of the first to seventh embodiments, the active ingredient is meperfluthrin, and the mosquito repellent contains 3 to 20 mg of the meperfluthrin.

In the mosquito repellent according to the ninth embodiment of the present invention, realized in combination with any one of the first to eighth embodiments, the combustible material is one or more kinds of materials selected from a group consisting of pulverized plants, plant carbides, plant fibers, plant-derived components, and regenerated plant fibers.

In the method for eliminating mosquitos according to the tenth embodiment of the present invention, a top of the mosquito repellent according to any one of claims 1 to 9 is ignited.

### Advantageous Effects of Invention

According to the present invention, a mosquito repellent has a continuing effect of eliminating mosquitoes for 5 hours or more by combustion of a short period of time such as few minutes to little more than ten minutes.

### Brief Description of Drawings

[FIG. 1] FIG. 1 is a perspective view of a mosquito repellent according to the first embodiment.
[FIG. 2] FIG. 2 is a perspective view of a mosquito repellent according to the second embodiment.

### Description of Embodiments

Hereinafter, embodiments of the present invention are explained.

### (First embodiment)

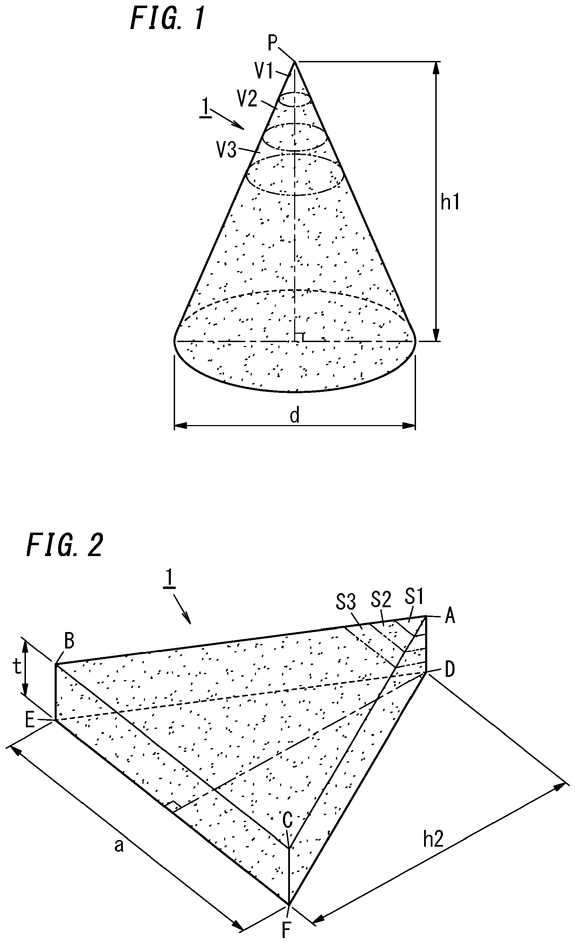

A mosquito repellent 1 according to the first embodiment is explained, referring to FIG. 1. The mosquito repellent 1 includes: an active ingredient; and a combustible material. When the mosquito repellent 1 is ignited, the combustible material starts to combust and generates smoke, and the active ingredient attached to each smoke particles of composing the smoke and is thereby spread out. Detail explanations of the active ingredient and the combustible material are common to the first embodiment and the second embodiment and therefore explained later on.

The mosquito repellent 1 has a shape of cone. A diameter of a base of the cone is d and a height of the cone is h1. Comparing the cone to a cylinder which is not drawn in the figure (of a diameter of a base being d and a height being h1), the mosquito repellent 1 having the shape of cone can spread out more of the active ingredient with combustion of a shorter period of time than a mosquito repellent (not drawn in the figure) having a shape of cylinder which has the same size of the base and the same height as the cone. In order to obtain a pesticidal effect and a duration of continuous effect (for example 5 hours or more) same as or better than a conventional mosquito repellent coil by the combustion of a short period of time such as few minutes to little more than ten minutes as well as to prevent loss of the active ingredient due to the combustion as much as possible, the shape and a weight of the mosquito repellent 1 play important roles. Regarding the shape and the weight, details are explained below.

A ratio of the diameter d of the base of the cone to the height h1 of the cone is within a range of 1:2 to 1:5 In other words, the height h1 of the cone is 2 to 5 times of the diameter d of the base. When the ratio departs from the range, the combusting time of the mosquito repellent 1 might become longer. The longer combusting time increases an amount of the smoke generated, leading to a possible cause of health problems. Also, when the ratio departs from the range, the loss of the active ingredient might increase. The loss of the active ingredient means that the active ingredient disappears without fulfilling its intended function for eliminating mosquitoes. When the ratio is within this range, more of the active ingredient can be spread with shorter combusting time. In other words, since the combusting time of the mosquito repellent becomes shorter, the generated smoke decreases, leading to less possibility of health problems. In addition, since an amount of the active ingredient spread in the space increases, mosquitoes can be eliminated for a longer period of time.

A diameter d of the base of the cone is within a range of 5 to 20 mm. When the diameter departs from the range, the combusting time of the mosquito repellent 1 might become longer, and the loss of the active ingredient might increase. The diameter d of the base of the cone is preferably within a range of 6 to 15 mm. When the diameter is within this range, more of the active ingredient can be spread with shorter combusting time.

A weight of the mosquito repellent 1 having a shape of cone according to the first embodiment is within a range of 0.1 to 8 g. When the weight of the mosquito repellent 1 is less than 0.1 g, the loss of the active ingredient increases, and mosquitoes cannot be eliminated sufficiently. When the weight of the mosquito repellent 1 is larger than 8 g, the combusting time becomes longer, and the amount of the smoke which might cause health problems increases. The weight of the mosquito repellent 1 is preferably within a range of 0.5 to 3 g. When the weight is within this range, more of the active ingredient can be spread with shorter combusting time.

A method for eliminating mosquitos using the mosquito repellent 1 according to the first embodiment is now explained. First, in a place where mosquitoes are desired to be eliminated, the mosquito repellent 1 is placed in a mosquito repellent holder (not drawn in the figure) so that the base of the cone faces down. The mosquito repellent holder stabilizes the combustion of a general mosquito repeller and makes it easier to clean ashes after the combustion by preventing the ashes from scattering around. A nonflammable plate or dish such as, for example, an ashtray may be used instead of the mosquito repellent holder. The place where mosquitoes are desired to be eliminated is not limited, but examples of such place include a living room, a kitchen, and a bedroom. When eliminating mosquitoes, windows and doors of the place where mosquitoes are to be eliminated are preferably closed. By sealing off the space where mosquitoes are desired to be eliminated, the active ingredient can be kept in the space and prevented from spreading outside of the space to be lost. Then, a top P of the mosquito repellent 1 is ignited. In other words, the sharpest part of the mosquito repellent 1, i.e., a vertex of the cone is ignited. The combusting portion is a first part V1 which is a small cone including the top P. The first part V1 reaches up to about 700 to 800 °C, and the smoke is mainly generated from the first part V1. A second part V2 which is a truncated cone right below the first part V1 reaches around 250 °C due to heat transmitted from the first part V1. While the active ingredient in the first part V1 undergoes thermal decomposition due to high temperature, the active ingredient in the second part V2 vaporizes without undergoing thermal decomposition and spreads out by attaching to each smoke particle composing the smoke. Since the second part V2 includes more of the active ingredient than the first part V1, the loss of the active ingredient can be decreased. Eventually, the first part V1 is burned to ashes and the second part V2 starts combusting. The second part V2 also reaches up to about 700 to 800 °C, and the smoke is mainly generated from the second part V2; however, the active ingredient in the second part V2 has already been spread to the space by the time when the first part V1 is burned. Then, a third part V3 which is a truncated cone right below the second part V2 reaches around 250 °C, and the active ingredient in the third part V3 spreads to the space. Accordingly, since the smoke is generated and the active ingredient spreads to the space until all the mosquito repellent 1 is burned out, the mosquito repellent 1 can have the continuing effect of eliminating mosquitoes even for 5 hours or more by combustion of a short period of time such as few minutes to little more than ten minutes.

As explained above, the mosquito repellent 1 preferably has a shape such that a part of the mosquito repellent 1 where combustion starts is as thin as possible and that the mosquito repellent 1 becomes thicker and thicker towards the base. When the mosquito repellent 1 has such shape, it is possible to make a combusting portion small and to spread more of the active ingredient contained in a portion adjacent to the combusting portion. Also, since a top part of the mosquito repellent 1 which is the top P is thin and sharp, an initial combusting time can be shortened and the effect of eliminating mosquitoes can come into an effect soon after the combustion starts.

### (Second embodiment)

A mosquito repellent 1 according to the second embodiment is explained, referring to FIG. 2. As with the first embodiment, the mosquito repellent 1 includes: an active ingredient; and a combustible material. When the mosquito repellent 1 is ignited, the combustible material starts to combust and generates smoke, and the active ingredient attached to each smoke particles of composing the smoke and is thereby spread out.

The mosquito repellent 1 according to the second embodiment has a shape of triangular prism. A height of the triangular prism is t, a base length of a base triangle (triangle DEF in FIG. 2) of the triangular prism is a, and a height of the base triangle is h2. Comparing this triangular prism to a cuboid, not drawn in the figure, having the same height t (a base length of a base rectangle being a and a height of the base rectangle being h2, i.e., lengths of adjacent sides of the base rectangle being a and h2), the mosquito repellent 1 having the shape of triangular prism can spread out more of the active ingredient with combustion of a shorter period of time than a mosquito repellent having a shape of cuboid. In order to obtain a pesticidal effect and a duration of continuous effect (for example 5 hours or more) same as or better than a conventional mosquito repellent coil by the combustion of a short period of time such as few minutes to little more than ten minutes as well as to prevent loss of the active ingredient due to the combustion as much as possible, the shape and a weight of the mosquito repellent 1 play important roles. Regarding the shape and the weight, details are explained below.

A ratio of the base length a of the base triangle of the triangular prism to the height h2 of the base triangle of the triangular prism is within a range of 1:1.1 to 1:5. In other words, the height h2 of the base triangle of the triangular prism is 1.1 to 5 times of the base length a of the base triangle. When the ratio departs from the range, the combusting time of the mosquito repellent 1 might become longer. The longer combusting time increases an amount of the smoke generated, leading to a possible cause of health problems. Also, when the ratio departs from the range, the loss of the active ingredient might increase. The loss of the active ingredient means that the active ingredient disappears without fulfilling its intended function for eliminating mosquitoes. The ratio of the base length a of the base triangle of the triangular prism to the height h2 of the base triangle of the triangular prism is preferably within a range of 1:2 to 1:5. In other words, the height h2 of the base triangle of the triangular prism is preferably 2 to 5 times of the base length a of the base triangle. When the ratio is within this range, more of the active ingredient can be spread with shorter combusting time. In other words, since the combusting time of the mosquito repellent becomes shorter, the generated smoke decreases, leading to less possibility of health problems. In addition, since an amount of the active ingredient spread in the space increases, mosquitoes can be eliminated for a longer period of time.

The base length a of the base triangle of the triangular prism is within a range of 10 to 30 mm. When the base length departs from the range, the combusting time of the mosquito repellent 1 might become longer, and the loss of the active ingredient might increase.

A weight of the mosquito repellent 1 according to the second embodiment is within a range of 0.5 to 6 g. When the weight of the mosquito repellent 1 is less than 0.5 g, the loss of the active ingredient increases, and mosquitoes cannot be eliminated sufficiently. When the weight of the mosquito repellent 1 is larger than 6 g, the combusting time becomes longer, and the amount of the smoke which might cause health problems increases.

The height t of the triangular prism is preferably within a range of 2 to 6 mm. When the height t of the triangular prism is larger than or equal to 2 mm, the loss of the active ingredient can be reduces. When the height t of the triangular prism is smaller than or equal to 6 mm, the combusting time of the mosquito repeller 1 can be shorted, and the amount of the smoke generated can be reduced.

A method for eliminating mosquitos using the mosquito repellent 1 according to the second embodiment is now explained. First, in a place where mosquitoes are desired to be eliminated, the mosquito repellent 1 is placed in a mosquito repellent holder (not drawn in the figure). When placing the mosquito repellent 1, any surface of the triangular prism can face down. In FIG. 2, the mosquito repeller 1 having the shape of the triangular prism is placed so that the triangle DEF faces down. The mosquito repellent holder same as the first embodiment can be used, and a nonflammable plate or dish may be used instead of the mosquito repellent holder. The place where mosquitoes are desired to be eliminated is not limited, but examples of such place include a living room, a kitchen, and a bedroom. When eliminating mosquitoes, windows and doors of the place where mosquitoes are to be eliminated are preferably closed. As in the first embodiment, by sealing off the space where mosquitoes are desired to be eliminated, the active ingredient can be kept in the space and prevented from spreading outside of the space to be lost. Then, a top of the mosquito repellent 1 is ignited. In other words, the sharpest part of the mosquito repellent 1 is ignited. It is preferable to ignite the top, i.e., a vertex of the triangular prism which is not included in the surface facing down. For example, when the mosquito repellent 1 is placed such that the triangle DEF faces down, it is preferable to ignite at least one of the vertices A, B, and C. Hereinafter, a case where the vertex A is ignited is explained. The combusting portion is a first part S1 which is a small triangular pyramid including the vertex A. The first part S1 reaches up to about 700 to 800 °C, and the smoke is mainly generated from the first part S1. A second part S2 which is a truncated triangular pyramid adjacent to the first part S1 reaches around 250 °C due to heat transmitted from the first part S1. While the active ingredient in the first part S1 undergoes thermal decomposition due to high temperature, the active ingredient in the second part S2 vaporizes without undergoing thermal decomposition and spreads out by attaching to each smoke particle composing the smoke. Since the second part S2 includes more of the active ingredient than the first part S1, the loss of the active ingredient can be decreased. Eventually, the first part S1 is burned to ashes and the second part S2 starts combusting. The second part S2 also reaches up to about 700 to 800 °C, and the smoke is mainly generated from the second part S2; however, the active ingredient in the second part S2 has already been spread to the space by the time when the first part S1 is burned. Then, a third part S3 which is a truncated triangular pyramid adjacent to the second part S2 reaches around 250 °C, and the active ingredient in the third part S3 spreads to the space. Accordingly, since the smoke is generated and the active ingredient spreads to the space until all the mosquito repellent 1 is burned out, the mosquito repellent 1 can have the continuing effect of eliminating mosquitoes even for 5 hours or more by combustion of a short period of time such as few minutes to little more than ten minutes.

As explained above, in the second embodiment, as in the first embodiment, the mosquito repellent 1 preferably has a shape such that a part of the mosquito repellent 1 where combustion starts is as thin as possible and that the mosquito repellent 1 becomes thicker and thicker towards the base. When the mosquito repellent 1 has such shape, it is possible to make a combusting portion small and to spread more of the active ingredient contained in a portion adjacent to the combusting portion. Also, since a top part of the mosquito repellent 1 which is the vertex of the triangular prism is thin and sharp, an initial combusting time can be shortened and the effect of eliminating mosquitoes can come into an effect soon after the combustion starts.

### (Common matters to First and Second embodiments)

The active ingredient is explained. The active ingredient is an ingredient which has a desired function such as a pesticidal function toward target organisms for elimination. Especially in the first and the second embodiments, the target organisms are hygiene pests of mosquitoes. Kind of mosquitoes are not especially limited. Specific examples of the mosquitoes include culex pipiens (also known as common house mosquitoes). Culex pipiens are common blood-sucking mosquitoes in Japan. Examples of the active ingredient effective for such mosquitoes include, for example, pyrethroid active ingredients, organic phosphorus active ingredients, and carbamate active ingredients.

The active ingredient is especially preferable at least one or more kinds of compounds selected from a group consisting of metofluthrin, transfluthrin, dimefluthrin, heptafluthrin, and meperfluthrin. Each of these five compounds is one of the pyrethroid active ingredients. Each of these five compounds can have geometric isomers and optical isomers. In the active ingredient, such isomers may co-exist at an arbitrary ratio. Each of these five compounds is a chemical agent which is volatile at a low temperature or a normal temperature and has re-volatility. In other words, after each of these five compounds is spread out in the space, each of these five compounds drops to the floor or attaches to the floor, the wall, and the ceiling, and then vaporizes again. Vaporization of the active ingredient occurs repeatedly and thereby an effect of eliminating mosquitoes continues for a certain period of time. Among the above five compounds, the metofluthrin is the most preferable since the metofluthrin is more effective toward mosquitoes.

In a case where the metofluthrin is used as the active ingredient, the mosquito repellent 1 preferably contains 3 to 10 mg of the metofluthrin and more preferably contains 5 mg or more of the metofluthrin. When the mosquito repellent 1 contains 3 mg or more of the metofluthrin, the effect of eliminating mosquitoes can continue for a sufficient period of time even with the loss of the active ingredient due to the combustion being taken into account. When the mosquito repellent 1 contains 10 mg or less of the metofluthrin, an excessive and wasteful use of the metofluthrin can be avoided while the continuing effect of eliminating mosquitoes being sustained to the maximum.

When the mosquito repellent 1 contains one of the transfluthrin, the dimefluthrin, the heptafluthrin, and the meperfluthrin as the active ingredient, the mosquito repellent 1 preferably contains 3 to 20 mg of the active ingredient and more preferably contains 5 mg or more of the active ingredient. When the mosquito repellent 1 contains 3 mg or more of the active ingredient, the effect of eliminating mosquitoes can continue for a sufficient period of time even with the loss of the active ingredient due to the combustion being taken into account. When the mosquito repellent 1 contains 20 mg or less of the active ingredient, an excessive and wasteful use of the active ingredient can be avoided while the continuing effect of eliminating mosquitoes being sustained to the maximum.

When at least two or more kinds of the above five compounds are used in combination as the active ingredient, the mosquito repellent 1 preferably contains 3 to 20 mg of the active ingredient in total.

Note that the metofluthrin is a commonly used name and also known as 2,3,5,6-tetrafluoro-4-methoxybenzyl(EZ)-(1RS,3RS;1RS,3SR)-2,2-dimethyl-3-(prop-1-enyl)cyc lopropane carboxylate.

The transfluthrin is a commonly used name and also known as 2,3,5,6-tetrafluorobenzyl=(1R,3S)-3-(2,2-dichlorovinyl)-2,2-dimethyl cyclopropane carboxylate.

The dimefluthrin is a commonly used name and also known as
2,3,5,6-tetrafluoro-4-(methoxymethyl)benzyl
2,2-dimethyl-3-(2-methylpropynyl-ene-1-yl)cyclopropane carboxylate.

The heptafluthrin is a commonly used name and also known as
2,3,5,6-tetrafluoro-4-(methoxymethyl)benzyl(1RS,3RS;1RS,3RS)-2,2-dimethyl-3-[(1Z)-3,3,3-tri fluoroprop-1-enyl]cyclopropane carboxylate.

The meperfluthrin is a commonly used name and also known as
2,3,5,6-tetrafluoro-4-(methoxymethyl)benzyl(1R,3S)-3-(2,2-dichlorovinyl)-2-dimethyl cyclopropane carboxylate.

The combustible material is explained. A material which starts combusting when ignited and keeps combusting can be used as the combustible material. For example, a combustible organic material used for a conventional mosquito repellent coil can be used as the combustible material; however, the combustible material is not particularly limited. The combustible material preferably is one or more kinds of materials selected from a group consisting of pulverized plants, plant carbides, plant fibers, plant-derived components, and regenerated plant fibers. Specific examples of the pulverized plants include mixed powder of pulverized wood, pulverized residue of pyrethrin extraction from pyrethrum, pulverized Litsea glutinosa which is a plant in Southeast Asia, pulverized bark of Machilus thunbergii, and pulverized shell of coconut. Such pulverized plants are usually mixed at appropriate amounts and used as the combustible material; however, the combustible material is not limited to the mixed pulverized plants. Specific examples of the plant carbides include coal powder used for burning incense. The coal powder may be used alone, but can be used in combination with the pulverized plants to prevent the amount of generated smoke. Specific examples of the plant fibers include cellulose. Specific examples of the plant-derived components include tapioca powder. Specific examples of the regenerated plant fibers include rayon shreds. A particle size of the combustible material is about 60 to 100 mesh.

Manufacturing methods of the mosquito repellents 1 according to the first and the second embodiments are explained.

First, the active ingredient is dissolved in a solvent and then a surfactant is added thereto. The mixture is fully mixed to obtain an emulsion containing the active ingredient.

Specific examples of the solvent (organic solvent) used to dissolve the active ingredient include: alcoholic solvents such as ethyl alcohol and isobutyl alcohol; aliphatic hydrocarbon solvents such as kerosene, lubricants, paraffins, isoparaffins, and naphthenes; aromatic hydrocarbon solvents such as xylol; glycol solvents such as ethyl glycol and propylene glycol; glycol ether solvents such as propylene glycol monoethyl ether; ketone solvents such as acetone and methyl ethyl ketone; and ester solvents such as ethyl acetate. However, the solvent is not particularly limited, and two or more kinds of the aforementioned solvents may be used in combination.

Specific examples of the surfactant (emulsifier) used for emulsifying the active ingredient include emulsifiers such as nonionic emulsifiers and anionic emulsifiers. More specifically, the examples of the surfactant include a mixture of monooleic acid sorbitan and monooleic acid polyoxyethyl sorbitan. Such emulsifiers may be used alone or in combination.

A mixture of polyoxyethylene stearyl phenyl ether formaldehyde polycondensate, polyoxyethylene styryl phenyl ether, polyoxyethylene fatty ester, calcium dodecyl benzene sulfonate, kerosene, and an aromatic hydrocarbon is a surfactant and at the same time functions as the solvent. Such surfactant may be used instead of the above solvent.

Next, the above obtained emulsion of the active ingredient is diluted to an appropriate concentration with water, and the diluted solution is poured to the combustible material while stirring to prepare an unmolded material. In this step, natural or synthetic thickeners or adhesives can be added at an appropriate amount along with water and the mixture can be kneaded to obtain the unmolded material. Also, natural or synthetic perfume can be added to spread scent by the combustion. The perfume is not particularly limited, but examples of the perfume include a rose perfume. A surfactant may be added and dissolved in the perfume and the perfume may be used in a form of an emulsion. Furthermore, fine powder of fragrant wood or fragrant materials can be added to the unmolded material at an appropriate amount. Moreover, natural or synthetic coloring agents may be added to the unmolded material at an appropriate amount. Pyroxenes such as mica can be added to the unmolded material instead of the coloring agents.

Then, a mold is filled with the unmolded material and the unmolded material is pressed tightly into the mold. In the first embodiment, a mold having a cone-shaped cavity is used, while in the second embodiment, a mold having a triangular prism-shaped cavity is used. The cavity of each of the molds is filled with the unmolded material. After that, the molded material (molded product) is taken out from the mold and air dried for 48 hours at a room temperature (for example, at 25 °C). Accordingly, the cone-shaped mosquito repellent 1 as drawn in FIG. 1 and the triangular prism-shaped mosquito repellent 1 as drawn in FIG. 2 can be obtained.

As apparent from the above explanations, in the first and the second embodiments, it is possible to obtain the mosquito repellent: which takes advantage of the conventional combustible mosquito repellent while overcoming the disadvantages of the conventional combustible mosquito repellent; which makes use of the manufacturing methods of the mat-type mosquito repellent and the liquid-type mosquito repellent and further makes use of advantages of the aerosol mosquito repellent with one-push fixed-amount spray; and which is based on a new concept. Among such mosquito repellents, the mosquito repellents having the shape of the cone or the shape of the triangular prism with certain sizes especially exhibit the effect of spreading the active ingredient and the effect of the active ingredient most sufficiently. In the first and the second embodiments, as in the conventional combustible mosquito repellent such as the mosquito repellent coil, the combustible material is used such that the combustible material is combusted to heat the active ingredient which is then spread to the space, and at the same time the active ingredient attaches to the smoke generated by the combustion, which facilitates the spreading of the active ingredient to the space by using the smoke as the medium. However, in the first and the second embodiments, unlike the conventional mosquito repellent coil, hours of combustion is not required; rather, the effect of eliminating mosquitos and the continuity of such effect equal to those of the conventional mosquito repellent can be exhibited by combustion of a very short period of time such as few minutes to little more than ten minutes. Further, using the metofluthrin as the active ingredient makes it possible to maintain the pesticidal effect and the duration of the continuous effect same as or better than the conventional combustible mosquito repellent even by the combustion of a short period of time since the active ingredient once spread to and vaporizes in the space attaches to the nearby objects and vaporizes again repeatedly. In addition, since the mosquito repellent 1 having the shape of the cone or the triangular prism of certain sizes, the loss of the active ingredient is prevented as much as possible and the spreading of the active ingredient occurs as efficiently as possible.

Note that the mosquito repellent 1 does not need to contain: stabilizers such as dibutylhydroxy toluene (BHT), butylhydroxy anisole (BHA), benzotriazole; and ultraviolet absorbing agents.

### Examples

Hereinafter, the present invention is explained further in detain, referring to examples.

### (Example 1)

10.64 parts by mass of metofluthrin (manufactured by Sumitomo Chemical Co., Ltd., purity of 94% or more) was dissolved in 89.36 parts by mass of an isoparaffin-based solvent ("IP SOLVENT 1620" manufactured by Idemitsu Kosan Co., Ltd.), and 10 parts by mass of a surfactant mixture (a mixture of monooleic acid sorbitan and monooleic acid polyoxyethyl sorbitan, "IONET S-80" manufactured by Sanyo Chemical Industries, Ltd.) was added to the solution and mixed thoroughly to obtain a 10 % metofluthrin emulsion.

Next, 32 parts by mass of mixed powder of pulverized wood (80 mesh), 29 parts by mass of pulverized residue of pyrethrin extraction from pyrethrum (80 mesh), 14 parts by mass of pulverized bark of Machilus thunbergii (80 mesh), 10 parts by mass of tapioca powder (80 mesh), and 15 parts by mass of pulverized shell of coconut (80 mesh) were measured and mixed while stirring to obtain a mixed plant powder as a combustible material.

The obtained 10 % metofluthrin emulsion was diluted to 20 times by tap water of 45 °C, and 100 parts by mass of the diluted solution was added to 100 parts by mass of the above obtained mixed plant powder little by little a few times while thoroughly stirring to obtain an unmolded material.

2 g of the above obtained unmolded material was placed into a plastic mold having a cone-shaped cavity wherein a diameter of a base of the cone is 10 mm and a height of the cone is 30 mm. The unmolded material was pressed tightly into the plastic mold and then taken out from the mold. After that, the unmolded material taken out from the mold was left and air-dried in a room at a temperature of 25 °C for 48 hours, and thereby a 1 g molded sample having a shape of cone and containing 5 mg of metofluthrin was obtained, which was used as a mosquito repellent in the example 1.

### (Example 2)

2 g of the unmolded material used in the example 1 was placed into a plastic mold having a triangular prism-shaped cavity wherein a base length of a base triangle of the triangular prism is 15 mm, a height of the base triangle of the triangular prism is 30 mm, and a height of the triangular prism is 5 mm. The unmolded material was dried and then a 1 g molded sample having a shape of triangular prism and containing 5 mg of metofluthrin was obtained, which was used as a mosquito repellent in the example 2.

### (Comparative example 1)

As in the example 1, the 10 % metofluthrin emulsion was prepared, and the mixed plant powder was prepared as the combustible material. The obtained 10 % metofluthrin emulsion was diluted to 60 times by tap water of 45 °C, and 100 parts by mass of the diluted solution was added to 100 parts by mass of the above obtained mixed plant powder little by little a few times while thoroughly stirring to obtain an unmolded material.

6 g of the above obtained unmolded material was placed into a plastic mold having a cylinder-shaped cavity wherein a diameter of a base of the cylinder is 10 mm and a height of the cylinder is 30 mm. As in the example 1, a 3 g molded sample having a shape of cylinder and containing 5 mg of metofluthrin was obtained, which was used as a mosquito repellent in the comparative example 1.

### (Comparative example 2)

As in the example 1, the 10 % metofluthrin emulsion was prepared, and the mixed plant powder was prepared as the combustible material. The obtained 10 % metofluthrin emulsion was diluted to 40 times by tap water, and 100 parts by mass of the diluted solution was added to 100 parts by mass of the above obtained mixed plant powder little by little a few times while thoroughly stirring to obtain an unmolded material.

4 g of the above obtained unmolded material was placed into a plastic mold having a cuboid-shaped cavity wherein a base length of the base rectangle of the cuboid is 15 mm, a height of the base rectangle of the cuboid is 30 mm, and a height of the cuboid is 5 mm. The unmolded material was dried and then a 2 g molded sample having a shape of cuboid and containing 5 mg of metofluthrin was obtained, which was used as a mosquito repellent in the comparative example 2.

In each of the examples 1 and 2, a top (the sharpest part) of the molded sample was ignited, while in each of the comparative examples 1 and 2, one end of the molded sample was ignited. All the generated smoke was suctioned and the suctioned smoke went through 300 ml of ethanol to collect the vaporized metofluthrin. A period of time since the ignition until the molded sample was burned out was measured as a combusting time. Ethanol which collected the metofluthrin was filtered by a glass fiber filter (GFF manufactured by AS ONE Corporation) to remove suspended solids and analyzed by gas chromatography in an ordinary method to measure an amount of the collected metofluthrin. The results are indicated in Table 1.

**[Table 1]**

| | | | |
|---|---|---|---|
| Relationship between: shape of mosquito repellent; and combusting time and metofluthrin collection rate | | | |

| Sample | Shape | Combusting time (minutes) | Collection rate (%) |
|---|---|---|---|
| Example 1 | Cone | 5.42 | 96.81 |
| Example 2 | Triangular prism | 4.63 | 96.13 |
| Comparative example 1 | Cylinder | 7.05 | 62.10 |
| Comparative example 2 | Cuboid | 5.25 | 67.42 |
| * Collection rate(%)= [amount of collected metofluthrin/initial amount of metofluthrin (5mg)] × 100 | | | |

From the above results, it was confirmed that metofluthrin is largely lost due to the combustion and an amount of the vaporized active ingredient is small, when a cylinder shape such as the comparative example 1 and a cuboid shape such as the comparative example 2 are employed. Therefore, it is supported that a cone shape such as the example 1 and a triangular prism shape such as the example 2, both being more sharp shapes, are important for efficient vaporization and spreading of the active ingredient.

### (Example 3)

As in the example 1, the 10 % metofluthrin emulsion was prepared, and the mixed plant powder was prepared as the combustible material. The obtained 10 % metofluthrin emulsion was diluted to 15 times by tap water of 45 °C, and 100 parts by mass of the diluted solution was added to 100 parts by mass of the above obtained mixed plant powder little by little a few times while thoroughly stirring to obtain an unmolded material.

1.5 g of the above obtained unmolded material was placed into a plastic mold having a cone-shaped cavity wherein a diameter of a base of the cone is 10 mm and a height of the cone is 15 mm. The unmolded material was pressed tightly into the plastic mold and then taken out from the mold. After that, the unmolded material taken out from the mold was left and air-dried in a room at a temperature of 25 °C for 48 hours, and thereby a 0.75 g molded sample having a shape of cone and containing 5 mg of metofluthrin was obtained, which was used as a mosquito repellent in the example 3.

### (Example 4)

As in the example 1, the 10 % metofluthrin emulsion was prepared, and the mixed plant powder was prepared as the combustible material. The obtained 10 % metofluthrin emulsion was diluted to 30 times by tap water of 45 °C, and 100 parts by mass of the diluted solution was added to 100 parts by mass of the above obtained mixed plant powder little by little a few times while thoroughly stirring to obtain an unmolded material.

3 g of the above obtained unmolded material was placed into a plastic mold having a cone-shaped cavity wherein a diameter of a base of the cone is 10 mm and a height of the cone is 45 mm. The unmolded material was pressed tightly into the plastic mold and then taken out from the mold. After that, the unmolded material taken out from the mold was left and air-dried in a room at a temperature of 25 °C for 48 hours, and thereby a 1.5 g molded sample having a shape of cone and containing 5 mg of metofluthrin was obtained, which was used as a mosquito repellent in the example 4.

### (Example 5)

As in the example 1, the 10 % metofluthrin emulsion was prepared, and the mixed plant powder was prepared as the combustible material. The obtained 10 % metofluthrin emulsion was diluted to 33.33 times by tap water of 45 °C, and 100 parts by mass of the diluted solution was added to 100 parts by mass of the above obtained mixed plant powder little by little a few times while thoroughly stirring to obtain an unmolded material.

3.33 g of the above obtained unmolded material was placed into a plastic mold having a cone-shaped cavity wherein a diameter of a base of the cone is 10 mm and a height of the cone is 50 mm. The unmolded material was pressed tightly into the plastic mold and then taken out from the mold. After that, the unmolded material taken out from the mold was left and air-dried in a room at a temperature of 25 °C for 48 hours, and thereby a 1.665 g molded sample having a shape of cone and containing 5 mg of metofluthrin was obtained, which was used as a mosquito repellent in the example 5.

### (Example 6)

As in the example 1, the 10 % metofluthrin emulsion was prepared, and the mixed plant powder was prepared as the combustible material. The obtained 10 % metofluthrin emulsion was diluted to 40 times by tap water of 45 °C, and 100 parts by mass of the diluted solution was added to 100 parts by mass of the above obtained mixed plant powder little by little a few times while thoroughly stirring to obtain an unmolded material.

4 g of the above obtained unmolded material was placed into a plastic mold having a cone-shaped cavity wherein a diameter of a base of the cone is 10 mm and a height of the cone is 60 mm. The unmolded material was pressed tightly into the plastic mold and then taken out from the mold. After that, the unmolded material taken out from the mold was left and air-dried in a room at a temperature of 25 °C for 48 hours, and thereby a 2 g molded sample having a shape of cone and containing 5 mg of metofluthrin was obtained, which was used as a mosquito repellent in the example 6.

### (Example 7)

As in the example 3, the unmolded material was prepared. 1.5 g of the above obtained unmolded material was placed into a plastic mold having a triangular prism-shaped cavity wherein a base length of a base triangle of the triangular prism is 15 mm, a height of the base triangle of the triangular prism is 45 mm, and a height of the triangular prism is 5 mm. The unmolded material was dried and then a 0.75 g molded sample having a shape of triangular prism and containing 5 mg of metofluthrin was obtained, which was used as a mosquito repellent in the example 7.

### (Example 8)

As in the example 4, the unmolded material was prepared. 3 g of the above obtained unmolded material was placed into a plastic mold having a triangular prism-shaped cavity wherein a base length of a base triangle of the triangular prism is 15 mm, a height of the base triangle of the triangular prism is 17.5 mm, and a height of the triangular prism is 5 mm. The unmolded material was dried and then a 1.5 g molded sample having a shape of triangular prism and containing 5 mg of metofluthrin was obtained, which was used as a mosquito repellent in the example 8.

### (Example 9)

As in the example 5, the unmolded material was prepared. 3.33 g of the above obtained unmolded material was placed into a plastic mold having a triangular prism-shaped cavity wherein a base length of a base triangle of the triangular prism is 15 mm, a height of the base triangle of the triangular prism is 50 mm, and a height of the triangular prism is 5 mm. The unmolded material was dried and then a 1.665 g molded sample having a shape of triangular prism and containing 5 mg of metofluthrin was obtained, which was used as a mosquito repellent in the example 9.

### (Example 10)

As in the example 6, the unmolded material was prepared. 4 g of the above obtained unmolded material was placed into a plastic mold having a triangular prism-shaped cavity wherein a base length of a base triangle of the triangular prism is 15 mm, a height of the base triangle of the triangular prism is 60 mm, and a height of the triangular prism is 5 mm. The unmolded material was dried and then a 2 g molded sample having a shape of triangular prism and containing 5 mg of metofluthrin was obtained, which was used as a mosquito repellent in the example 10.

In each of the examples 3 to 10, as in the examples 1 and 2, an amount of the vaporized metofluthrin was measured by gas chromatography, and combusting time was also measured. The results are indicated in Table 2.

**[Table 2]**

| | | | | | | | | |
|---|---|---|---|---|---|---|---|---|
| Difference in sizes of cone and triangular prism and relationship between: sizes; and combusting time and metofluthrin collection rate | | | | | | | | |

| Sample | Shape | Diameter d (mm) | Height h1 (mm) | Ratio (d:h1) | | Weight (g) | Combusting time (minutes) | Collection rate (%) |
|---|---|---|---|---|---|---|---|---|
| Example 3 | Cone | 10 | 15 | 1:1.5 | | 0.75 | 4.25 | 83.42 |
| Example 4 | Cone | 10 | 45 | 1:4.5 | | 1.5 | 5.13 | 95.01 |
| Example 1 | Cone | 10 | 30 | 1:3 | | 1 | 5.42 | 96.81 |
| Example 5 | Cone | 10 | 50 | 1:5 | | 1.665 | 8.12 | 94.88 |
| Example 6 | Cone | 10 | 60 | 1:6 | | 2 | 10.02 | 91.23 |

| Sample | Shape | Base length a (mm) | Height h2 (mm) | Ratio (a:h2) | Height t (mm) | Weight (g) | Combusting time (minutes) | Collection rate (%) |
|---|---|---|---|---|---|---|---|---|
| Example 7 | Triangular prism | 15 | 45 | 1:3 | 5 | 0.75 | 3.55 | 79.02 |
| Example 8 | Triangular prism | 15 | 17.5 | 1:1.17 | 5 | 1.5 | 4.28 | 94.33 |
| Example 2 | Triangular prism | 15 | 30 | 1:2 | 5 | 1 | 4.63 | 96.13 |
| Example 9 | Triangular prism | 15 | 50 | 1:3.33 | 5 | 1.665 | 6.65 | 97.20 |
| Example 10 | Triangular prism | 15 | 60 | 1:4 | 5 | 2 | 9.80 | 93.47 |
| * Collection | rate(%)=[amount | of collected | metofluthrin/initial | | amount of | metofluthrin | (5mg)]× 100 | |

Example 6 is not representative of the present invention

According to Table 2, among the mosquito repellents having a shape of cone, the examples 1, 4, and 5 exhibits reduced amounts of the metofluthrin lost due to the combustion, compared to the example 3. Also, compared to the example 6, the examples 1, 4, and 5 exhibit shorter combusting time and reduced amounts of the metofluthrin lost due to the combustion.

Therefore, considering comprehensively, it turned out that in the mosquito repellent having a shape of cone, the ratio of the diameter of the base of the cone to the height of the cone is more preferably within a range of 1:2 to 1:5.

### (Example 11)

As in the example 1, the 10 % metofluthrin emulsion was prepared, and the mixed plant powder was prepared as the combustible material. The obtained 10 % metofluthrin emulsion was diluted to 2.5 times by tap water of 45 °C, and 100 parts by mass of the diluted solution was added to 100 parts by mass of the above obtained mixed plant powder little by little a few times while thoroughly stirring to obtain an unmolded material.

0.25 g of the above obtained unmolded material was placed into a plastic mold having a cone-shaped cavity wherein a diameter of a base of the cone is 5 mm and a height of the cone is 15 mm. The unmolded material was pressed tightly into the plastic mold and then taken out from the mold. After that, the unmolded material taken out from the mold was left and air-dried in a room at a temperature of 25 °C for 48 hours, and thereby a 0.125 g molded sample having a shape of cone and containing 5 mg of metofluthrin was obtained, which was used as a mosquito repellent in the example 11.

### (Example 12)

As in the example 1, the 10 % metofluthrin emulsion was prepared, and the mixed plant powder was prepared as the combustible material. The obtained 10 % metofluthrin emulsion was diluted to 4.31 times by tap water of 45 °C, and 100 parts by mass of the diluted solution was added to 100 parts by mass of the above obtained mixed plant powder little by little a few times while thoroughly stirring to obtain an unmolded material.

0.464 g of the above obtained unmolded material was placed into a plastic mold having a cone-shaped cavity wherein a diameter of a base of the cone is 6 mm and a height of the cone is 18 mm. The unmolded material was pressed tightly into the plastic mold and then taken out from the mold. After that, the unmolded material taken out from the mold was left and air-dried in a room at a temperature of 25 °C for 48 hours, and thereby a 0.232 g molded sample having a shape of cone and containing 5 mg of metofluthrin was obtained, which was used as a mosquito repellent in the example 12.

### (Example 13)

As in the example 1, the 10 % metofluthrin emulsion was prepared, and the mixed plant powder was prepared as the combustible material. The obtained 10 % metofluthrin emulsion was diluted to 63.6 times by tap water of 45 °C, and 100 parts by mass of the diluted solution was added to 100 parts by mass of the above obtained mixed plant powder little by little a few times while thoroughly stirring to obtain an unmolded material.

6.36 g of the above obtained unmolded material was placed into a plastic mold having a cone-shaped cavity wherein a diameter of a base of the cone is 15 mm and a height of the cone is 45 mm. The unmolded material was pressed tightly into the plastic mold and then taken out from the mold. After that, the unmolded material taken out from the mold was left and air-dried in a room at a temperature of 25 °C for 48 hours, and thereby a 3.18 g molded sample having a shape of cone and containing 5 mg of metofluthrin was obtained, which was used as a mosquito repellent in the example 13.

### (Example 14)

As in the example 1, the 10 % metofluthrin emulsion was prepared, and the mixed plant powder was prepared as the combustible material. The obtained 10 % metofluthrin emulsion was diluted to 80 times by tap water of 45 °C, and 100 parts by mass of the diluted solution was added to 100 parts by mass of the above obtained mixed plant powder little by little a few times while thoroughly stirring to obtain an unmolded material.

16 g of the above obtained unmolded material was placed into a plastic mold having a cone-shaped cavity wherein a diameter of a base of the cone is 20 mm and a height of the cone is 60 mm. The unmolded material was pressed tightly into the plastic mold and then taken out from the mold. After that, the unmolded material taken out from the mold was left and air-dried in a room at a temperature of 25 °C for 48 hours, and thereby a 8 g molded sample having a shape of cone and containing 5 mg of metofluthrin was obtained, which was used as a mosquito repellent in the example 14.

In each of the examples 11 to 14, as in the examples 1 and 2, an amount of the vaporized metofluthrin was measured by gas chromatography, and combusting time was also measured. The results are indicated in Table 3.

**[Table 3]**

| | | | | | | | |
|---|---|---|---|---|---|---|---|
| Difference in diameter of base of cone and height of cone and relationship between: diameters and heights; and combusting time and metofluthrin collection rate | | | | | | | |

| Sample | Shape | Diameter d (mm) | Height h1 (mm) | Ratio (d:h1) | Weight (g) | Combusting time (minutes) | Collection rate (%) |
|---|---|---|---|---|---|---|---|
| Example 11 | Cone | 5 | 15 | 1:3 | 0.125 | 3.25 | 73.28 |
| Example 12 | Cone | 6 | 18 | 1:3 | 0.232 | 4.8 | 89.03 |
| Example 1 | Cone | 10 | 30 | 1:3 | 1 | 5.42 | 96.81 |
| Example 13 | Cone | 15 | 45 | 1:3 | 3.18 | 8.86 | 97.14 |
| Example 14 | Cone | 20 | 60 | 1:3 | 8 | 13.75 | 92.11 |
| * Collection rate(%)=[amount of collected metofluthrin/initial amount of metofluthrin (5mg)]× 100 | | | | | | | |

In the examples 1, and 11 to 14, the ratio of the diameter of the base of the cone to the height of the cone is fixed to 1:3, and only the diameter was modified to examine the combusting time and an amount of vaporized metofluthrin.

As a result, it was confirmed that the smaller the diameter of the base of the cone becomes, the shorter the combusting time becomes; however when the diameter is as small as 5 mm, a speed of metofluthrin being lost becomes faster than a speed of metofluthrin being vaporized due to shortened combusting time. On the other hand, as the diameter increases, a total weight and a total volume increases, and thereby there observed a tendency that the combusting time becomes longer. Accordingly, it is concluded that as in the examples 1, 12, and 13, the diameter within a range of 6 to 15 mm is the most efficient.

According to the examples 3 to 10 in Table 2 and the examples 11 to 14 in Table 3, it turned out that in the mosquito repellent having a shape of cone, the ratio of the diameter of the base of the cone to the height of the cone is within a range of 1:2 to 1:5, the weight of the mosquito repellent is preferably within a range of 0.5 to 3 g, and the diameter of the base of the cone is preferably within a range of 5 to 15 mm. Also, it turned out that in the mosquito repellent having a shape of triangular prism, the ratio of the base length of the base triangle of the triangular prism to the height of the base triangle of the triangular prism is preferably within a range of 1:2 to 1:5, the weight of the mosquito repellent is preferably within a range of 0.5 to 6 g, and the base length of the base triangle of the triangular prism is preferably within a range of 10 to 30 mm

Next, in the examples 1 and 2, a pesticidal test was carried out using culex pipiens of the most common blood-sucking mosquitoes in Japan.

Note that the pesticidal test was carried out in comparative examples 3 and 4 below, and the pesticidal effects were compared.

### (Comparative example 3)

As the comparative example 3, a commercially available aerosol mosquito repellent with one-push fixed-amount containing metofluthrin as an active ingredient (product name: one push KATORI for 60 days, manufactured by Lion Chemical Co., Ltd) was prepared. This product discharges 12 mg of undiluted liquid containing 5 mg of metofluthrin when sprayed once.

### (Comparative example 4)

As the comparative example 4, a mosquito repellent coil commercially available in South Africa, containing 0.005 % of metofluthrin (product name: DOOM (registered trademark), manufactured by TIGER BRANDS.) was prepared.

Regarding the examples 1 and 2 and the comparative examples 3 and 4, JAPAN ENVIRONMENTAL SANITATION CENTER was entrusted with the pesticidal effect confirming test toward culex pipiens.

A laboratory room of a size of 8 tatami mats was completely sealed, and after the temperature in the laboratory room was stabilized, in each of the examples 1 and 2 and the comparative example 4, the mosquito repellent was placed at a center of the laboratory room and ignited. In the examples 1 and 2, the top of the cone and the top of the triangular prism was ignited. In the comparative example 4, the fire was extinguished and the combustion was stopped 120 minutes after the ignition. In the comparative example 3, the mosquito repellent was sprayed once towards the ceiling of the laboratory from a corner of the laboratory room (sprayed from 1.5 m high).

Sample culex pipiens confined in net cages were placed in the laboratory room 30 minutes, 120 minutes, 240 minutes, and 480 minutes after the ignition and starting of the combustion of the mosquito repellent. The net cages were hung 1.5 m high from the floor of the laboratory room in 6 spots in the laboratory room. Note that the net cages were prepared by cutting a 16 mesh bleached net into a 23 cm square, making the cut net into a bag, and stapling the circumference of the bag.

After certain periods of time up to 120 minutes since the sample mosquitoes had been placed in the laboratory room, a number of knocked down mosquitoes out of the sample mosquitoes were observed. The test was carried out twice, and an average percentage of the knocked down mosquitoes were calculated. Then, based on the Litchfield & Wilcoxon method, KT₅₀ values and KT₈₀ values were calculated. The net cages containing the sample mosquitoes were taken out from the laboratory room 120 minutes later. The sample mosquitoes in the net cages were fed with sugar water soaked in absorbent cotton and stored in a different room.

A percentage of completely dead mosquitoes and a percentage of almost dying mosquitoes were counted 24 hours after the sample mosquitoes were collected, and accordingly a mortality rate (a total amount of the number of completely dead mosquitoes and the number of almost dying mosquitoes) was calculated. Note that the test was carried out twice for each of the sample mosquito repellents. Based on the calculated mortality rates, KT₅₀ values, and KTso values, effects of the samples were evaluated and average values are shown in Table 4.

**[Table 4]**

| | | | | |
|---|---|---|---|---|
| Pesticidal effect of examples 1, 2 and comparative examples 3, 4 on culex pipiens | | | | |

| Sample | Time when mosquitoes are places (minutes) | KT₅₀ (minutes) | KT₈₀ (minutes) | Mortality rate 24 hours after mosquitoes are collected (%) |
|---|---|---|---|---|
| Example 1 | 30 | 4.1 | 6.7 | 100 |
| | 120 | 13.2 | 17.3 | 78.2 |
| | 240 | 45.2 | 91.3 | 63.1 |
| | 480 | 74.9 | 171.8 | 50.8 |
| Example 2 | 30 | 4.8 | 5.9 | 100 |
| | 120 | 14.2 | 18.1 | 78.2 |
| | 240 | 46.1 | 90.3 | 60.5 |
| | 480 | 75.8 | 176.1 | 52.3 |
| Comparative example 3 | 30 | 2.2 | 7.4 | 100 |
| | 120 | 4.8 | 16.5 | 72.2 |
| | 240 | 12.5 | 58.1 | 45.6 |
| | 480 | 27.8 | 84.1 | 33.3 |
| Comparative example 4 | 30 | 36.7 | 54.9 | 44.4 |
| | 120 | None | None | 1.1 |
| | 240 | None | None | 1.1 |
| | 480 | None | None | 2.2 |

From the results of the tests, it was confirmed that the examples 1 and 2 have the almost same pesticidal effects with the comparative example 3 which is a pesticidal quasi drug approved by Japanese Ministry of Health, Labour and Welfare. On the other hand, the examples 1 and 2 exhibit far higher pesticidal effects compared to the comparative example 4 which is registered and approved for use in South Africa.

In the comparative example 4, a combusting test was carried out. Specifically, as in the examples 1 and 2 and the comparative examples 1 and 2, a period of time since the ignition until the sample was burned out was measured as the combusting time. The combusting test was carried out twice for each sample, and the average value is shown in Table 5.

**[Table 5]**

| | |
|---|---|
| Result of combusting test of comparative example 4 | |

| Sample | Time required for complete combustion |
|---|---|
| Comparative example 4 | 27,348 seconds (455 minutes 48 seconds) |

From the result of the combusting test, it turned out that the comparative example 4 which is a conventional mosquito repellent coil requires a long combusting time and that a total amount of the generated smoke from the conventional mosquito repellent coil is large.

### (Example 15)

As in the example 1, the unmolded material was prepared. The unmolded material was extended into a plate with a thickness of 3 mm, and then the unmolded material was cut out from the plate in a shape of triangular prism such that a base length of a base triangle of the triangular prism is 15 mm and a height of the base triangle of the triangular prism is 45 mm. The cut out unmolded material having a shape of triangular prism was then air dried, and thereby 1 g molded sample having a shape of triangular prism and containing 5 mg of metofluthrin was obtained, which was used as a mosquito repellent in the example 15.

As in the examples 1 and 2, the pesticidal test to determine the pesticidal effect was carried out using culex pipiens. The test was carried out twice, and the resulting average values are shown in Table 6.

**[Table 6]**

| | | | | |
|---|---|---|---|---|
| Pesticidal effect of example 15 on culex pipiens | | | | |

| Sample | Time when mosquitoes are places (minutes) | KT₅₀ (minutes) | KT₈₀ (minutes) | Mortality rate 24 hours after mosquitoes are collected (%) |
|---|---|---|---|---|
| Example 15 | 30 | 4.2 | 6.0 | 100 |
| | 120 | 12.9 | 16.8 | 79.2 |
| | 240 | 42.5 | 87.1 | 63.0 |
| | 480 | 74.1 | 168.5 | 52.4 |

From the results of the tests, it was confirmed that the example 15 also have the almost same pesticidal effects with the comparative example 3 which is a pesticidal quasi drug approved by Japanese Ministry of Health, Labour and Welfare.

As in the comparative example 4, a combusting test was carried out, and the combusting time of the example 15 was measured. The result is shown in Table 7.

**[Table 7]**

| | |
|---|---|
| Result of combusting test of example 15 | |

| Sample | Time required for complete combustion (seconds) |
|---|---|
| Example 15 | 341 |

As in the examples 1 and 2, it turned out that the example 15 has a sufficient pesticidal effect with a short combusting time.

### (Example 16)

10.64 parts by mass of a surfactant (a mixture of polyoxyethylene styryl phenyl ether formaldehyde polycondensate, polyoxyethylene styryl phenyl ether, polyoxyethylene fatty ester, calcium dodecyl benzene sulfonate, kerosene, and an aromatic hydrocarbon, "Solpole 2841" manufactured by TOHO Chemical Industry CO., Ltd.) was added to 89.36 parts by mass of metofluthrin (manufactured by Sumitomo Chemical Co., Ltd., purity of 94% or more), which was mixed thoroughly to obtain a 84.00 % metofluthrin emulsion.

0.00595 parts by mass of the obtained 84.00 % metofluthrin emulsion was added to 99.405 parts by mass of tap water of 45 °C to make a total of 100 parts by mass. The mixture was stirred well and emulsified. The emulsified mixture was added to 100 parts by mass of the mixed plant powder, which is the same mixed plant powder as in the example 1, little by little a few times while thoroughly stirring to obtain an unmolded material.

2 g of the above obtained unmolded material was placed into a plastic mold having a cone-shaped cavity wherein a diameter of a base of the cone is 10 mm and a height of the cone is 30 mm. The unmolded material was pressed tightly into the plastic mold and then taken out from the mold. After that, the unmolded material taken out from the mold was left and air-dried in a room at a temperature of 25 °C for 48 hours, and thereby a 1 g molded sample having a shape of cone and containing 5 mg of metofluthrin was obtained, which was used as a mosquito repellent in the example 16.

As in the examples 1 and 2, the pesticidal test to determine the pesticidal effect was carried out for the example 16 using culex pipiens. The test was carried out twice, and the resulting average values are shown in Table 8.

**[Table 8]**

| | | | | |
|---|---|---|---|---|
| Pesticidal effect of example 16 on culex pipiens | | | | |

| Sample | Time when mosquitoes are places (minutes) | KT₅₀ (minutes) | KT₈₀ (minutes) | Mortality rate 24 hours after mosquitoes are collected (%) |
|---|---|---|---|---|
| Example 16 | 30 | 4.8 | 6.9 | 100 |
| | 120 | 14.5 | 18.3 | 79.9 |
| | 240 | 46.2 | 92.1 | 60.1 |
| | 480 | 78.2 | 177.7 | 48.3 |

From the results of the tests, it was confirmed that the example 16 also have the almost same pesticidal effects with the comparative example 3 which is a pesticidal quasi drug approved by Japanese Ministry of Health, Labour and Welfare.

### (Example 17)

10.64 parts by mass of metofluthrin (manufactured by Sumitomo Chemical Co., Ltd., purity of 94% or more) was dissolved in 89.36 parts by mass of an isoparaffin-based solvent ("IP SOLVENT 1620" manufactured by Idemitsu Kosan Co., Ltd.), and 10 parts by mass of a surfactant mixture (a mixture of monooleic acid sorbitan and monooleic acid polyoxyethyl sorbitan, "IONET S-80" manufactured by Sanyo Chemical Industries, Ltd.) was added to the solution and mixed thoroughly to obtain a 10 % metofluthrin emulsion.

40 parts by mass of a rose-based perfume which mainly contains geraniol, citronella, nerol, and linalool and 10 parts by mass of tetraoleic acid polyoxyethylene sorbitan surfactant ("SANNONIC SS-90" manufactured by Sanyo Chemical Industries, Ltd.) were dissolved in 50 parts by mass of No. 1 kerosene and mixed to obtain a 40 % emulsion of a perfume premix.

Next, 31.8 parts by mass of mixed powder of pulverized wood (80 mesh), 29 parts by mass of pulverized residue of pyrethrin extraction from pyrethrum (80 mesh), 14 parts by mass of pulverized Litsea glutinosa which is a plant in Southeast Asia (bark of plant in Litsea genus Lauraceae family, commonly known as siam powder) (80 mesh), 10 parts by mass of tapioca powder (80 mesh), 15 parts by mass of pulverized shell of coconut (80 mesh), 0.05 parts by mass of red pigment No. 106, and 0.15 parts by mass of red pigment No. 230-1 were measured and mixed while stirring to obtain a mixed plant powder containing coloring agents as a combustible material.

5 parts by mass of the above obtained 10 % metofluthrin emulsion and 5 parts by mass of the above obtained 40 % perfume premix were diluted by 90 parts by mass of tap water of 45 °C, and 100 parts by mass of the diluted solution was obtained. The obtained diluted solution was added to 100 parts by mass of the above obtained mixed plant powder little by little a few times while thoroughly stirring to obtain an unmolded material.

2 g of the above obtained unmolded material was placed into a plastic mold having a cone-shaped cavity wherein a diameter of a base of the cone is 10 mm and a height of the cone is 20 mm. The unmolded material was pressed tightly into the plastic mold and then taken out from the mold. After that, the unmolded material taken out from the mold was left and air-dried in a room at a temperature of 25 °C for 48 hours, and thereby a 1 g molded sample having a shape of cone and containing 5 mg of metofluthrin, 0.2 mg of the coloring agents, and 2 mg of the rose-based perfume was obtained, which was used as a mosquito repellent in the example 17.

As in the examples 1 and 2, the pesticidal test to determine the pesticidal effect was carried out for the example 17 using culex pipiens. The test was carried out twice, and the resulting average values are shown in Table 9.

**[Table 9]**

| | | | | |
|---|---|---|---|---|
| Pesticidal effect of example 17 on culex pipiens | | | | |

| Sample | Time when mosquitoes are places (minutes) | KT₅₀ (minutes) | KT₈₀ (minutes) | Mortality rate 24 hours after mosquitoes are collected (%) |
|---|---|---|---|---|
| Example 17 | 30 | 4.8 | 6.9 | 100 |
| | 120 | 14.5 | 18.3 | 79.9 |
| | 240 | 46.2 | 92.1 | 60.1 |
| | 480 | 78.2 | 177.7 | 48.3 |

From the results of the tests, it was confirmed that the example 17 also have the almost same pesticidal effects with the comparative example 3 which is a pesticidal quasi drug approved by Japanese Ministry of Health, Labour and Welfare, as in the examples 1, 2, 15, and 16. Furthermore, it turned out that adding perfume and coloring agents does not affect the pesticidal effect of the mosquito repellent.

### (Example 18)

10.64 parts by mass of transfluthrin (CAS registry number 118712-89-3, purity of 94% or more) was dissolved in 89.36 parts by mass of an isoparaffin-based solvent ("IP SOLVENT 1620" manufactured by Idemitsu Kosan Co., Ltd.), and 10 parts by mass of a surfactant mixture (a mixture of monooleic acid sorbitan and monooleic acid polyoxyethyl sorbitan, "IONET S-80" manufactured by Sanyo Chemical Industries, Ltd.) was added to the solution and mixed thoroughly to obtain a 10 % transfluthrin emulsion.

The obtained 10 % transfluthrin emulsion was diluted to 20 times by tap water of 45 °C, and 100 parts by mass of the diluted solution was added to 100 parts by mass of the mixed plant powder obtained by the same method as the example 1 little by little a few times while thoroughly stirring to obtain an unmolded material.

2 g of the above obtained unmolded material was placed into a plastic mold having a cone-shaped cavity wherein a diameter of a base of the cone is 10 mm and a height of the cone is 30 mm. The unmolded material was pressed tightly into the plastic mold and then taken out from the mold. After that, the unmolded material taken out from the mold was left and air-dried in a room at a temperature of 25 °C for 48 hours, and thereby a 1 g molded sample having a shape of cone and containing 5 mg of transfluthrin was obtained, which was used as a mosquito repellent in the example 18.

### (Example 19)

Except that dimefluthrin (CAS registry number 271241-14-6, purity of 94% or more) was used instead of the transfluthrin, a 1 g molded sample having a shape of cone and containing 5 mg of dimefluthrin was obtained by the method same as the above example 18, which was used as a mosquito repellent in the example 19.

### (Example 20)

Except that heptafluthrin (CAS registry number 1130296-65-9, purity of 94% or more) was used instead of the transfluthrin, a 1 g molded sample having a shape of cone and containing 5 mg of heptafluthrin was obtained by the method same as the above example 18, which was used as a mosquito repellent in the example 20.

### (Example 21)

Except that meperfluthrin (CAS registry number 915288-13-0, purity of 94% or more) was used instead of the transfluthrin, a 1 g molded sample having a shape of cone and containing 5 mg of meperfluthrin was obtained by the method same as the above example 18, which was used as a mosquito repellent in the example 21.

As in the examples 1 and 2, the pesticidal test to determine the pesticidal effect was carried out for each of the examples 18 to 21 using culex pipiens. The test was carried out twice for each of the examples 18 to 21, and the resulting average values are shown in Table 10.

**[Table 10]**

| | | | | |
|---|---|---|---|---|
| Pesticidal effect of example 18, 19, 20, and 21 on culex pipiens | | | | |

| Sample | Time when mosquitoes are places (minutes) | KT₅₀ (minutes) | KT₈₀ (minutes) | Mortality rate 24 hours after mosquitoes are collected (%) |
|---|---|---|---|---|
| Example 18 | 30 | 5.6 | 6.8 | 100 |
| | 120 | 15.2 | 19.8 | 78.0 |
| | 240 | 51.4 | 98.4 | 55.4 |
| | 480 | 81.8 | 195.6 | 45.8 |
| Example 19 | 30 | 5.1 | 6.3 | 100 |
| | 120 | 14.9 | 18.7 | 77.6 |
| | 240 | 50.3 | 93.4 | 57.4 |
| | 480 | 77.5 | 187.6 | 49.3 |
| Example 20 | 30 | 5.5 | 6.7 | 100 |
| | 120 | 15.9 | 20.8 | 68.4 |
| | 240 | 52.7 | 102.2 | 52.4 |
| | 480 | 79.4 | 199.3 | 49.4 |
| Example 21 | 30 | 5.7 | 6.8 | 100 |
| | 120 | 15.7 | 21.4 | 66.4 |
| | 240 | 51.9 | 97.9 | 53.1 |
| | 480 | 78.1 | 197.3 | 49.7 |

From the results of the tests, it was confirmed that the examples 18 to 21 also have the almost same pesticidal effects with the examples 1 and 2 as well as the comparative example 3 which is a pesticidal quasi drug approved by Japanese Ministry of Health, Labour and Welfare.

As apparent from the above, even though spreading of the active ingredient is facilitated by smoke which is the advantage of the combustible mosquito repellent in order to widely spread the active ingredient for eliminating mosquitoes to the housing space, the amount of the generated smoke was successfully reduced and health of the residents were fully considered. Also, since a compound (for example, metofluthrin) which has re-volatility and is volatile at a low temperature or a normal temperature is used as the active ingredient, the effect continued for a long period of time with a short combusting time. In realizing the continuous effect with the short combusting time, the loss of the active ingredient due to the combustion of the combustible material, which is the disadvantage of the combustible mosquito repellent coil, was prevented as much as possible, and at the same time, the shapes of the mosquito repellent which enable the most efficient spreading of the active ingredient were determined. In other words, the mosquito repellent preferably has a shape of cone or triangular prism with certain sizes. Also, since the combusting time was shortened to few minutes to little more than ten minutes, health of the residents was further considered, and at the same time, the effect of eliminating mosquitoes and the continuity of such effect at the same level or more with the conventional mosquito repellent coil were achieved.

### Reference Signs List

1 Mosquito repellent

## Claims

1. A mosquito repellent, comprising:
an active ingredient; and
a combustible material,
**characterized in that**
the mosquito repellent having a shape of cone,
a ratio of a diameter of a base of the cone to a height of the cone being within a range of 1:2 to 1:5,
the diameter being within a range of 5 to 20 mm,
the active ingredient being at least one or more kinds of compounds selected from a group consisting of metofluthrin, transfluthrin, dimefluthrin, heptafluthrin, and meperfluthrin,
the mosquito repellent containing 3 to 20 mg of the active ingredient and
a weight of the mosquito repellent being within a range of 0,1 to 8 g.

2. A mosquito repellent, comprising:
an active ingredient; and
a combustible material,
**characterized in that**
the mosquito repellent having a shape of triangular prism,
a ratio of a base length of a base triangle of the triangular prism to a height of the base triangle of the triangular prism being within a range of 1:1,1 to 1:5,
the base length being within a range of 10 to 30 mm,
the active ingredient being at least one or more kinds of compounds selected from a group consisting of metofluthrin, transfluthrin, dimefluthrin, heptafluthrin, and meperfluthrin,
the mosquito repellent containing 3 to 20 mg of the active ingredient and
a weight of the mosquito repellent being within a range of 0,5 to 6 g.

3. The mosquito repellent according to claim 2, wherein
a height of the triangular prism is within a range of 2 to 6 mm.

4. The mosquito repellent according to any one of claims 1 to 3, wherein
the active ingredient is metofluthrin, and
the mosquito repellent contains 3 to 10 mg of the metofluthrin.

5. The mosquito repellent according to any one of claims 1 to 4, wherein
the active ingredient is transfluthrin, and
the mosquito repellent contains 3 to 20 mg of the transfluthrin.

6. The mosquito repellent according to any one of claims 1 to 5, wherein
the active ingredient is dimefluthrin, and
the mosquito repellent contains 3 to 20 mg of the dimefluthrin.

7. The mosquito repellent according to any one of claims 1 to 6, wherein
the active ingredient is heptafluthrin, and
the mosquito repellent contains 3 to 20 mg of the heptafluthrin.

8. The mosquito repellent according to any one of claims 1 to 7, wherein
the active ingredient is meperfluthrin, and
the mosquito repellent contains 3 to 20 mg of the meperfluthrin.

9. The mosquito repellent according to any one of claims 1 to 8, wherein
the combustible material is one or more kinds of materials selected from a group consisting of pulverized plants, plant carbides, plant fibers, plant-derived components, and regenerated plant fibers.

10. A method for eliminating mosquitos, wherein
a top of the mosquito repellent according to any one of claims 1 to 9 is ignited.

## Patentansprüche

1. Mückenabwehrmittel, umfassend:
einen Wirkstoff; und
ein brennbares Material,
**dadurch gekennzeichnet, dass**
das Mückenabwehrmittel eine Kegelform aufweist,
ein Verhältnis von einem Durchmesser einer Basis des Kegels zu einer Höhe des Kegels innerhalb eines Bereichs von 1:2 bis 1:5 liegt,
der Durchmesser innerhalb eines Bereichs von 5 bis 20 mm liegt,
es sich bei dem Wirkstoff um mindestens eine oder mehrere Arten von Verbindungen, ausgewählt aus einer Gruppe bestehend aus Metofluthrin, Transfluthrin, Dimefluthrin, Heptafluthrin und Meperfluthrin, handelt,
das Mückenabwehrmittel 3 bis 20 mg des Wirkstoffs enthält, und
ein Gewicht des Mückenabwehrmittels innerhalb eines Bereichs von 0,1 bis 8 g liegt.

2. Mückenabwehrmittel, umfassend:
einen Wirkstoff; und
ein brennbares Material,
**dadurch gekennzeichnet, dass**
das Mückenabwehrmittel eine Dreiecksprismaform aufweist,
ein Verhältnis von einer Basislänge eines Basisdreiecks des Dreiecksprismas zu einer Höhe des Basisdreiecks des Dreiecksprismas innerhalb eines Bereichs von 1:1,1 bis 1:5 liegt,
die Basislänge innerhalb eines Bereichs von 10 bis 30 mm liegt,
es sich bei dem Wirkstoff um mindestens eine oder mehrere Arten von Verbindungen, ausgewählt aus einer Gruppe bestehend aus Metofluthrin, Transfluthrin, Dimefluthrin, Heptafluthrin und Meperfluthrin, handelt,
das Mückenabwehrmittel 3 bis 20 mg des Wirkstoffs enthält, und
ein Gewicht des Mückenabwehrmittels innerhalb eines Bereichs von 0,5 bis 6 g liegt.

3. Mückenabwehrmittel nach Anspruch 2, wobei
eine Höhe des Dreiecksprismas innerhalb eines Bereichs von 2 bis 6 mm liegt.

4. Mückenabwehrmittel nach einem beliebigen der Ansprüche 1 bis 3, wobei der Wirkstoff Metofluthrin ist, und
das Mückenabwehrmittel 3 bis 10 mg des Metofluthrins enthält.

5. Mückenabwehrmittel nach einem beliebigen der Ansprüche 1 bis 4, wobei der Wirkstoff Transfluthrin ist, und
das Mückenabwehrmittel 3 bis 20 mg des Transfluthrins enthält.

6. Mückenabwehrmittel nach einem beliebigen der Ansprüche 1 bis 5, wobei der Wirkstoff Dimefluthrin ist, und
das Mückenabwehrmittel 3 bis 20 mg des Dimefluthrins enthält.

7. Mückenabwehrmittel nach einem beliebigen der Ansprüche 1 bis 6, wobei der Wirkstoff Heptafluthrin ist, und
das Mückenabwehrmittel 3 bis 20 mg des Heptafluthrins enthält.

8. Mückenabwehrmittel nach einem beliebigen der Ansprüche 1 bis 7, wobei der Wirkstoff Meperfluthrin ist, und
das Mückenabwehrmittel 3 bis 20 mg des Meperfluthrins enthält.

9. Mückenabwehrmittel nach einem beliebigen der Ansprüche 1 bis 8, wobei es sich bei dem brennbaren Material um eine oder mehrere Arten von Materialien, ausgewählt aus einer Gruppe bestehend aus pulverisierten Pflanzen, Pflanzencarbiden, Pflanzenfasern, pflanzlichen Bestandteilen und regenerierten Pflanzenfasern, handelt.

10. Verfahren zur Beseitigung von Mücken, wobei
eine Spitze des Mückenabwehrmittels nach einem beliebigen der Ansprüche 1 bis 9 angezündet wird.

## Revendications

1. Un produit répulsif des moustiques, comprenant :
un ingrédient actif ; et
un matériau combustible,
**caractérisé en ce que**
le produit répulsif des moustiques a une forme de cône,
un rapport entre le diamètre d'une base du cône et une hauteur du cône étant compris entre 1:2 et 1:5,
le diamètre étant compris entre 5 et 20 mm,
l'ingrédient actif étant au moins un ou plusieurs types de composés choisis dans un groupe comprenant la métofluthrine, la transfluthrine, la diméfluthrine, l'heptafluthrine et la méperfluthrine,
le produit répulsif des moustiques contenant de 3 à 20 mg de principe actif,
et
un poids du produit répulsif des moustiques étant compris entre 0,1 et 8 g.

2. Un produit répulsif des moustiques, comprenant :
un ingrédient actif ; et
un matériau combustible,
**caractérisé en ce que**
le produit répulsif des moustiques ayant une forme de prisme triangulaire,
un rapport d'une longueur de base d'un triangle de base du prisme triangulaire à une hauteur du triangle de base du prisme triangulaire étant comprise entre 1:1,1 et 1:5,
la longueur de base étant comprise entre 10 et 30 mm,
l'ingrédient actif étant au moins un ou plusieurs types de composés choisis dans un groupe comprenant la métofluthrine, la transfluthrine, la diméfluthrine, l'heptafluthrine et la méperfluthrine,
le produit répulsif des moustiques contenant de 3 à 20 mg de l'ingrédient actif, et
un poids du produit répulsif des moustiques étant compris entre 0,5 et 6 g.

3. Le produit répulsif des moustiques selon la revendication 2, dans lequel une hauteur du prisme triangulaire est comprise entre 2 et 6 mm.

4. Le produit répulsif des moustiques selon l'une quelconque des revendications 1 à 3, dans lequel
l'ingrédient actif est la métofluthrine, et
le produit répulsif des moustiques contient de 3 à 10 mg de métofluthrine.

5. Le produit répulsif des moustiques selon l'une quelconque des revendications 1 à 4, dans lequel
l'ingrédient actif est la transfluthrine, et
le produit répulsif des moustiques contient de 3 à 20 mg de transfluthrine.

6. Le produit répulsif des moustiques selon l'une quelconque des revendications 1 à 5, dans lequel
l'ingrédient actif est la diméfluthrine, et
le produit répulsif des moustiques contient de 3 à 20 mg de diméfluthrine.

7. Le produit répulsif des moustiques selon l'une quelconque des revendications 1 à 6, dans lequel
l'ingrédient actif est l'heptafluthrine, et
le produit répulsif des moustiques contient de 3 à 20 mg d'heptafluthrine.

8. Le produit répulsif des moustiques selon l'une quelconque des revendications 1 à 7, dans lequel
l'ingrédient actif est la méperfluthrine, et
le produit répulsif des moustiques contient de 3 à 20 mg de la méperfluthrine.

9. Le produit répulsif des moustiques selon l'une quelconque des revendications 1 à 8, dans lequel
le matériau combustible est un ou plusieurs types de matériaux choisis dans un groupe comprenant les végétaux pulvérisés, les carbures végétaux, les fibres végétales, les composants d'origine végétale et les fibres végétales régénérées.

10. Un procédé pour éliminer les moustiques, dans lequel une partie supérieure du produit répulsif des moustiques selon l'une quelconque des revendications 1 à 9 est enflammée.
